# EUROPEAN PATENT APPLICATION

(11) **EP 4 098 863 A1**
(43) Date of publication of application: **07.12.2022**
(21) Application number: 21177816.2
(22) Date of filing: 04.06.2021
(51) Int. Cl.: F03B 13/14

(54) **FLOATING BODY, METHOD FOR MANUFACTURING A FLOATING BODY AND DEVICE ROR EXTRACTING ENERGY FROM SEA WAVES**

(71) Applicant: Gersprenz Sustainable Asset Management OHG, 64846 Groß-Zimmern (DE)
(72) Inventor: Hierse, Wolfgang, 64846 Groß-Zimmern (DE)
(74) Representative: Schatz, Markus Franz-Josef

(57) **Abstract**

The invention relates to a floating body (3) for a device (1) for extracting energy from sea waves (2). In order to be able to provide an inexpensively producible device (1) for extracting energy from sea waves (2), the floating body (3) is formed at least for the most part as an extruded float (3).

## Description

### Technical Field

The invention relates to a floating body for a device for extracting energy from sea waves. Moreover, the invention relates to a device for extracting energy from sea waves, comprising at least one floating body and at least one energy generation unit drivable by sea water which has flown over at least one overflow section of the device. Furthermore, the invention relates to a method for manufacturing a floating body for a device for extracting energy from sea waves.

### Background

Sea waves are potentially an important source of renewable, carbon-neutral energy. Although many different designs of wave energy converters have already been proposed and tested, sea waves are still not utilized for energy generation at a significant scale. The key obstacle is cost competitiveness of wave energy extraction, which is mainly due to the high production and maintenance cost of existing wave energy converters, as well as their limited scalability: Most existing designs do not profit from straightforward scale-up of device proportions because energy conversion efficiency drops once device dimensions exceed the typical wavelengths of sea waves, while converter production costs rapidly increase with size.

Existing wave energy converters may be classified into several well-known types described in the previous art, such as attenuators, point absorbers, oscillating wave surge converters, oscillating water column assemblies, submerged pressure differential devices, rotating-mass assemblies, bulge wave assemblies, overtopping or terminator devices, and some device types not classifiable as any of the above. The various design types differ significantly in terms of their mechanical complexity and materials used, and therefore also in terms of their cost of manufacture, deployment, longevity, and maintenance. Among the design types listed above, overtopping or terminator devices stand out in terms of simplicity and robustness, since they only involve ocean waves overtopping a fixed barrier and filling a water reservoir to a level above the ocean, which can then drive hydrodynamic energy production. This simplicity of design, absence of moving parts and minimization of maintenance offers inherent cost advantages. In addition, overtopping is one of the very few wave energy conversion principles whose conversion efficiency is not adversely impacted once device dimensions significantly exceed the typical wave lengths of ocean waves. Therefore, overtopping devices also have the highest potential to achieve competitive energy production cost by straightforward economies of scale. Modern designs of overtopping or terminator devices are for example disclosed in US 2019 / 0 271 293 A1, WO 2015 / 074 168 A1, EP 2 042 728 A1 und WO 1996 / 000 848 A1.

In spite of all these inherent cost advantages of wave energy conversion based on overtopping, the construction of any large overtopping device according to existing designs will still be quite expensive because correspondingly big machinery and major infrastructure is required.

### Invention Disclosure

It is an object of the invention to provide a low-cost producible device for extracting energy from sea waves.

This object is solved by the independent claims. Advantageous embodiments are disclosed in the dependent claims, the following description, and the figures, wherein these embodiments taken individually or in combination of at least two of these embodiments with each other may represent an advantageous and/or further developing aspect of the invention. Advantageous embodiments of the floating body and/or the device may correspond to advantageous embodiments of the method, and vice versa, even if this is not explicitly disclosed in the following description.

A floating body according to the invention for a device for extracting energy from sea waves is formed at least for the most part as an extruded floating body.

According to the invention, the device for extracting energy from sea waves may be manufactured using one or more floating bodies, each of which is formed for the most part or completely as an extruded floating body. Since the manufacturing costs associated with manufacturing such an extruded floating body are relatively low, the manufacturing costs of the device may be significantly reduced. For example, an extruded floating body may be manufactured using an existing extrusion line using a special customized extrusion die, but without the need for costly development of a special extrusion line.

The present invention relates to a new overtopping device design and production process, whereby the size of the key production equipment can be effectively decoupled from the size scale of the final device, and km-scale devices can be efficiently produced on moderate-scale equipment available and operational today.

The floating body according to the invention may have a linear geometry, i.e. in particular may be designed as a mathematical cylinder with an arbitrary cross-sectional area, the mathematical cylinder height of which is oriented along the sea surface during operation of the device. Various attachments or openings may be arranged or formed on the floating body along its mathematical cylinder height. The mathematical cylinder height, which is called the length of the floating body in the following, is preferably many times larger than a dimension of the cross-sectional area of the floating body.

To protect the environment, the floating body according to the invention is preferably designed to be unsinkable. For this purpose, the floating body may have, for example, a mechanically protective outer shell, which may be partially or completely filled with a foam material that is non-toxic to aquatic organisms, in particular a closed-cell foam material that is resistant to seawater. In addition, the floating body may be designed to be recyclable, so that the floating body may be largely or completely recycled. Recycling of a completely polymer-based floating body may be achieved, for example, by fractionizing or shredding the floating body into recyclable polymer material.

The present invention relates to the "overflow" principle, also known as "overtopping" principle, one of the few known wave energy conversion principles whose efficiency is not negatively impacted by scale-up, while it also has an absolute minimum of moving mechanical parts, which promises longevity, minimal maintenance needs, and therefore low cost. The invention adds to these existing advantages a novel device design that may be manufactured on existing large-diameter polymer extrusion equipment, whereby the linear device dimensions are essentially decoupled from the size scale of the manufacturing equipment, leading to further and potentially decisive cost advantages.

According to an advantageous embodiment, the floating body is formed at least for the most part from a thermoplastic polymer or a polymer foam. Thus, the floating body may be manufactured by extruding a thermoplastic polymer or a polymer foam. The floating body may also be formed entirely from a thermoplastic polymer or a polymer foam. The polymer foam can be thermoplastic polymer foam.

According to a further advantageous embodiment, the floating body is solid or a hollow body. A solid floating body is also to be understood to mean, among other things, a floating body formed largely or completely from a foamed material. In a floating body formed as a hollow body, at least one closed cavity or cavity open to the environment, in particular a buoyancy chamber, like described below, may be arranged. Also two or more corresponding cavities may be arranged in a floating body formed as a hollow body.

According to a further advantageous embodiment, the floating body has at least one ramp-shaped overflow section. Preferably, a sea wave approaching the device impinges on an inclined surface of the overflow section, whereby the sea wave increases by a certain amount when impinging on the overflow section, so that an upper part of the sea wave flows over a geodetically highest point of the overflow section to become usable for energy extraction (overflow principle). The inclined surface may be partially or completely flat or curved. The floating body may also have two or more ramp-shaped overflow sections arranged in series along the length of the floating body. The respective overflow section may be a separately manufactured component or a section of the floating body that is monolithically manufactured with the rest of the floating body.

According to a further advantageous embodiment, the floating body is at least partially rectilinear or curved. For example, the floating body may be partially or completely curved with a bending radius of at least L/2π, where L is the length of the floating body extending along a sea surface when the device is used as intended. The curved floating body can thus be C-shaped or annular, for example.

A device according to the invention for extracting energy from sea waves comprises at least one floating body and at least one energy generation unit drivable by seawater which has flown over at least one overflow section of the device, wherein the floating body is formed according to one of the above embodiments or a combination of at least two of these embodiments with each other.

The advantages mentioned above with respect to the floating body are correspondingly associated with the device. The device can extract energy from sea waves by supplying seawater, which has flown over the overflow section after a sea wave has hit the floating body, to the energy generation unit. The device is arranged to supply the seawater flown over the overflow section to the energy generation unit.

The device can possibly additionally be set up to extract energy from wind. For this purpose, the device can have at least one wind turbine.

The device according to the invention may also have two or more extruded floating bodies. When two or more extruded floating bodies are used, at least two floating bodies may differ from each other in their extrusion materials or may be made from the same extrusion material.

When two or more extruded floating bodies are used, at least two floating bodies can be arranged relative to each other in such a way that a V-shaped assembly formed by the two floating bodies forms a funnel facing the direction of wave motion and tapering in the direction of wave motion, what increases the height of the incoming wave crests.

To protect the environment, at least one component of the device can be equipped with at least one transponder that facilitates the location or retrieval of the component if the component become mechanically detached from the device. In this way, two or more components of the device may be equipped with corresponding transponders.

The device according to the invention may comprise at least one electronic communication unit by means of which the device can be remotely controlled by a remote control located on the mainland or an island.

The device according to the invention can have at least one measuring unit with which, for example, a current wave height, a current wind condition and/or a current immersion depth of the floating body can be measured, possibly at several points along the length of the floating body, in particular continuously. The device can have at least one control unit arranged to carry out continuous control, for example of a volumetric flow of seawater supplied to the power generation unit, on the basis of this measurement data, and possibly further measurement data, for example the measurement data mentioned further below.

According to an advantageous embodiment, the energy generation unit comprises at least one rotor and at least one generator drivable with the rotor, wherein the rotor is drivable with the seawater that has flown over the overflow section. The potential energy of the seawater that has flown over the overflow section can be used to drive the rotor and thus the generator. With the generator, the energy of the seawater that has flown over the overflow section can be converted into electrical energy that can be supplied to the mainland or an island via electrical lines. The electrical energy can also be used at sea for the electrolysis of sea water and the production of hydrogen which can be transported on shore by a gas pipeline or gas tanker vessels. The rotor can be designed as a water turbine, in particular a low-head turbine. The energy generation unit may also have two or more assemblies, each consisting of a rotor and a generator.

According to a further advantageous embodiment, the energy generation unit comprises at least one rotor and at least one pump drivable with the rotor for compressing a working medium, wherein the rotor is drivable with the seawater that has flown over the overflow section. The working medium may be liquid or gaseous. The pump serves as a compressor and converts the energy of the seawater that has flown over the overflow section into a transportable energy in the form of a mechanical working medium pressure that can be transported to the mainland or an island. For this purpose, the device may be connected to the mainland by means of at least one high-pressure hose. The energy generation unit may also have two or more assemblies, each formed by a rotor and a pump.

According to another advantageous embodiment, the device comprises at least one water-receiving basin arranged relative to the floating body such that seawater which has flown over the overflow section enters the water-receiving basin and passes from the water-receiving basin to the rotor. The water-receiving basin may be formed to extend along at least a part of the floating body and to be elongated. The water-receiving basin is open to the seawater that has flown over the overflow section at an upper surface facing away from the sea. The water-receiving basin can be filled with seawater up to a maximum level, which is preferably set to be above the equilibrium level of the sea, i.e. above the sea level in the absence of all sea waves. As a result, the seawater in the water-receiving basin has, at least in part, increased potential energy with which the rotor of the energy generation unit can be driven. The floating body can be cup-shaped and thereby form the water-receiving basin. On an upper side of such a floating body facing away from the sea, one or more openings may be arranged through which the seawater that has flown over an overflow portion of the floating body is directed into the water-receiving basin. The water-receiving basin may be closed at axial ends with one end cap each. At least one end cap may have at least one mechanical attachment for the energy generation unit and/or at least one connection for the discharge of seawater from the water-receiving basin to the energy generation unit. The energy generation unit or a water conduit connecting the energy generation unit to the water-receiving basin is preferably disposed at a bottom of the water-receiving basin, wherein seawater supplied to the energy generation unit is allowed to drain downwardly into the sea after acting upon the energy generation unit. The device may include power-controlled valves to control the flow of seawater from the water-receiving basin to the energy generation unit. For this purpose, the device can have at least one control unit that controls the valves, which can be, for example, the above-mentioned control unit and to which the above-mentioned and/or below-mentioned measurement data can be fed for evaluation.

According to a further advantageous embodiment the water-receiving basin is formed at least for the most part as an extruded water-receiving basin. Through this, the water-receiving basin itself may be formed as a floating body. The water-receiving basin can be extruded separately and afterwards joined laterally to the floating body. Alternatively, the water-receiving basin can be extruded simultaneous and together with the floating body in one single extrusion process, and therefore, the water-receiving basin can be formed integrally with the floating body.

According to a further advantageous embodiment, the device comprises at least two floating bodies arranged at a distance from each other. The floating bodies may be rigidly interconnected by two or more connecting elements extending transversely of the floating bodies. The assembly formed by the floating bodies and the connecting elements can be rigid and without moving parts. The respective connecting element may itself be designed as a floating body. At least one connecting element can be connected to an above-mentioned end cap of the water-receiving basin or may form such an end cap. The above-mentioned water-receiving basin can be extruded separately and afterwards joined laterally to the floating bodies. Alternatively, the water-receiving basin can be extruded simultaneous and together with the floating bodies in one single extrusion process, and therefore, the water-receiving basin can be formed integrally with the floating bodies.

According to a further advantageous embodiment, the device comprises at least one buoyancy chamber being open to the sea bottom and means for varying a volume of air within the buoyancy chamber, said means being adapted to vary said volume of air within said buoyancy chamber such that at least a maximum filling level within said water-receiving basin is arranged geodetically higher than an equilibrium sea level. By varying the air volume in the buoyancy chamber, the immersion depth of the device can be varied, also to be able to optimize the amount of sea water entering the water-receiving basin. By increasing the volume of air within the buoyancy chamber, seawater is displaced from the buoyancy chamber, and vice versa. For this purpose, the buoyancy chamber is open towards the sea bottom in the manner of an Archimedean bell chamber. By controlling the air-to-water ratio in the buoyancy chamber, for example by means of the above-mentioned control unit, the immersion depth of the device can be controlled, whereby, for example, the intake of seawater in the water-receiving basin can be adapted to the current height of the wave crests. Preferably, a suitable geometrical arrangement of the water-receiving basin and the floating bodies ensures that the device remains buoyant and is secured against capsizing even when the water-receiving basin is filled to the maximum. Uniform filling of the water-receiving basin along its longitudinal extent stabilizes the device against local upward/downward displacements, for example bending, of the floating body and the water-receiving basin.

The device can have at least one compressed air supply unit with which the buoyancy chamber can be supplied with compressed air. For this purpose, the compressed air supply unit can have at least one compressed air reservoir or at least one compressed air generation unit, for example an air compressor. The compressed air generation unit can be formed, for example, by the pump of the above-mentioned energy generation unit. The buoyancy chamber can be designed in such a way that it is self-floating even when the water-receiving basin is completely filled with seawater and even when the buoyancy chamber is completely filled with seawater.

The device according to the invention can have at least one measuring unit, for example the above-mentioned measuring unit, with which, for example, a water level in the buoyancy chamber can be measured. In addition, the device may comprise a control unit, for example the above-mentioned control unit, with which the application of the compressed air to the buoyancy chamber can be controlled on the basis of the measurement data, for example also comprising the above-mentioned measurement data. The buoyancy chamber may have one or more openings arranged below the waterline, through which seawater can flow as ballast into and out of the buoyancy chamber. The buoyancy chamber can be subdivided along the longitudinal extension of the buoyancy chamber into two or more separate buoyancy sub chambers, the filling level of which can be individually adjusted with compressed air. This subdivision of the buoyancy chamber into separate buoyancy sub chambers can be achieved, for example, by a suitable extrusion process, namely by periodically intermittent injection of the extrusion material directly into the buoyancy chamber during the extrusion process for manufacturing the buoyancy chamber. The device may additionally comprise at least one floating body whose buoyancy is or is not correspondingly adjustable by at least one buoyancy chamber within the floating body. At least one aforementioned end cap of the water-receiving basin may comprise at least one connection for supplying the buoyancy chamber with compressed air.

According to a further advantageous embodiment, the buoyancy chamber is formed at least for the most part as an extruded buoyancy chamber. Through this, the buoyancy chamber itself may be formed as a floating body. The buoyancy chamber can be extruded separately and afterwards joined laterally to the floating body. Alternatively, the buoyancy chamber can be extruded simultaneous and together with the floating body and/or the water-receiving basin in one single extrusion process, and therefore, the buoyancy chamber can be formed integrally with the floating body and/or water-receiving basin.

According to a further advantageous embodiment, the device has at least one anti-capsizing structure. The anti-capsizing structure can largely prevent the device from capsizing under extreme conditions. The anti-capsizing structure may, for example, comprise rods extending transversely to the floating body, at each end of which at least one float is arranged. These floats can, for example, be connected to the rods by ropes.

According to a further advantageous embodiment, the device comprises at least one anchor and at least one slack mooring rope connecting the anchor at least indirectly to the floating body. The device may be anchored to the sea bottom by means of such an anchoring structure. Alternatively, the anchoring structure may be a fixed structure permanently erected on the sea bottom, for example to support the weight of the energy generation unit. For example, an existing wind turbine may be retrofitted with the device. The device may have at least one alignment unit that allows the device to align itself on the sea surface relative to wave motion directions. The alignment unit may be connected between the anchoring structure and the rest of the device.

According to a method for manufacturing a floating body for a device for extracting energy from sea waves according to the invention, the floating body is at least for the most part manufactured using an extrusion process.

The advantages mentioned above with respect to the floating body and/or the device are correspondingly associated with the method. In particular, the floating body according to one of the above-mentioned embodiments or a combination of at least two of these embodiments with each other can be manufactured by means of the method.

Using the method according to the invention, the floating body can preferably be extruded continuously by means of an existing extrusion line equipped with a tailor-made extrusion die for manufacturing the floating body. Pipes or other profiles with a diameter of up to 2 m and a length of several 100 m can already be produced with such existing extrusion lines. For the manufacture of the floating body, also several extrusion lines can be operated in parallel in order to be able to achieve an increase in the cross-sectional area of the floating body beyond what can be manufactured with existing extrusion lines with a large diameter.

Different polymer materials can be combined in the manufacture of the floating body.

For mechanical stabilization and stiffening of the floating body, ropes (e.g. made of nylon or steel) can be co-extruded into the polymer base material to absorb tensile loads at critical reinforcement points of the cross-sectional profile of the floating body.

According to an advantageous embodiment, the floating body is manufactured at least for the most part by extrusion of a thermoplastic polymer or a polymer foam. With this embodiment the advantages mentioned above with reference to the corresponding embodiment of the floating body are correspondingly associated.

In the following, the invention will be explained by way of example with reference to the accompanying figures on the basis of preferred embodiments, wherein the features explained below can represent an advantageous and/or further developing aspect of the invention both taken individually and in different combinations with each other.

### Brief Description of the Figures

- Fig. 1: shows a schematic representation of an embodiment of a device according to the invention;
- Fig. 2: shows a schematic representation of a further embodiment of a device according to the invention;
- Fig. 3: shows a schematic representation of a further embodiment of a device according to the invention;
- Fig. 4: shows a schematic and perspective representation of a further embodiment of a device according to the invention; and
- Fig. 5: shows a schematic representation of a further embodiment of a device according to the invention.

### Detailed Description of the Figures

In the figures, identical or functionally identical components are given the same reference signs. A repeated description of such components may be omitted to avoid unnecessary repetition.

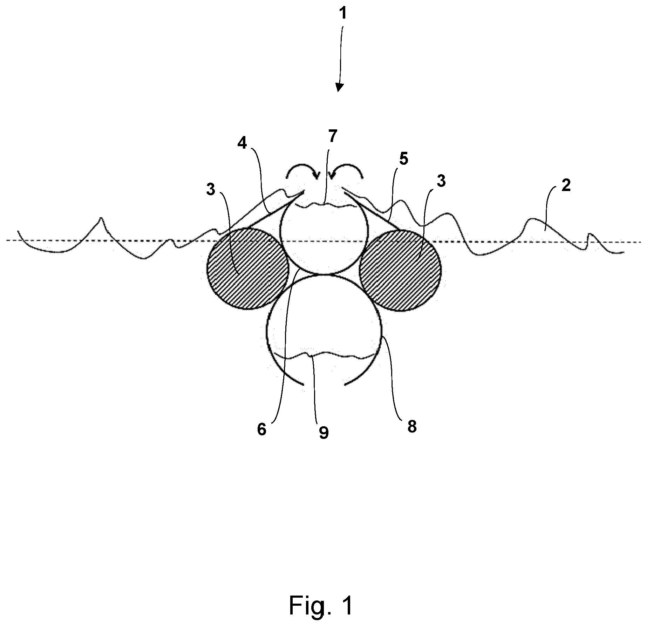

Fig. 1 shows a schematic representation of an embodiment of a device 1 according to the invention for extracting energy from sea waves 2.

The device 1 has two rectilinearly formed floating bodies 3, each formed as a solid, extruded floating body 3. Each floating body 3 is formed at least for the most part from a thermoplastic polymer or a polymer foam.

The device 1 has two ramp-shaped overflow sections 4 and 5 which run parallel to one another and are arranged at a distance from each other. Each overflow section 4 and 5 can be formed integrally with the respective floating body 3. In particular, the respective assembly formed by one of the overflow sections 4 and 5 and one of the floating bodies 3 can be produced by a single extrusion process. Alternatively, each overflow section 4 and 5 can be manufactured, e.g. extruded, separately from the respective floating body 3, and may be joined, e.g. adhesively bonded and/or mechanically connected, to the respective floating body 3.

The device 1 also has an elongated water-receiving basin 6 having a C-shaped cross-section and being closed at axial ends in a manner not shown. The water-receiving basin 6 can be formed integrally with the floating bodies 3 and/or the overflow sections 4 and 5. In particular, the assembly formed by water-receiving basin 6 on one hand and the floating bodies 3 and/or the overflow sections 4 and 5 on the other hand can be produced by a single extrusion process. Alternatively, the water-receiving basin 6 can be manufactured, e.g. extruded, separately from the floating bodies 3 and the overflow sections 4 and 5, and may be joined, e.g. adhesively bonded and/or mechanically connected, to the floating bodies 3 and/or overflow sections 4 and 5.

In Fig. 1, sea waves 2 running up from the left and/or from the right onto the respective overflow section 4 or 5 partially overflow the upper edge of the respective overflow section 4 or 5, as a result of which the water-receiving basin 6 is filled with sea water, as shown in Fig. 1. Thus, the water-receiving basin 6 is arranged relative to the floating body 3 in such a manner that the seawater that has flown over the respective overflow section 4 or 5 enters the water-receiving basin 6.

The device 1 also has at least one energy generation unit, not shown, which is drivable by the seawater that has flown over the respective overflow section 4 or 5 and that is located in the water-receiving basin 6.

The energy generation unit may comprise at least one rotor, not shown, and at least one generator, not shown, drivable with the rotor, the rotor being drivable by the seawater 7 that has flown over the respective overflow section 4 or 5 and that is located in the water-receiving basin 6. Alternatively or additively, the energy generation unit may comprise at least one rotor, not shown, and at least one pump, not shown, which is drivable with the rotor for compressing a working medium, wherein the rotor is drivable by the seawater 7 which has flown over the respective overflow section 4 or 5 and which is located in the water-receiving basin 6. Thus, the water-receiving basin 6 is arranged relative to the floating bodies 3 such that the seawater 7 contained in the water-receiving basin 6 passes from the water-receiving basin 6 to the respective rotor.

Additionally, the device 1 comprises a cylindrical C-shaped buoyancy chamber 8 running parallel to the longitudinal extent of the floating bodies 3. The buoyancy chamber 8 is open at its lower side facing the sea bottom, not shown. A water level 9 is indicated in the buoyancy chamber 8, above which air is located in the buoyancy chamber 8.

The buoyancy chamber 8 can be formed integrally with the floating bodies 3. In particular, the assembly formed by buoyancy chamber 8 and the floating bodies 3 can be produced by a single extrusion process. Alternatively, the buoyancy chamber 8 can be manufactured, e.g. extruded, separately from the floating bodies 3, and may be joined, e.g. adhesively bonded and/or mechanically connected, to the floating bodies 3.

Furthermore, the device 1 comprises means, not shown, for varying a volume of air within the buoyancy chamber 8, the means being arranged to vary the volume of air within the buoyancy chamber 8 such that at least a maximum fill level within the water-receiving pool 6 is located geodetically higher than an equilibrium level of the sea, as shown in Fig. 1.

Said means can have at least one compressed air supply unit, not shown, with which the buoyancy chamber 8 can be supplied with compressed air. For this purpose, the compressed air supply unit may comprise at least one compressed air reservoir, not shown, or at least one compressed air generation unit, not shown, for example an air compressor. The compressed air generation unit may be formed, for example, by the pump of the above-mentioned energy generation unit.

The device 1 can have at least one measuring unit, not shown, with which, for example, a water level in the buoyancy chamber 8 can be measured. In addition, the device 1 can have a control unit, not shown, with which the application of the compressed air to the buoyancy chamber 8 can be controlled on the basis of the measurement data. This allows the buoyancy of the buoyancy chamber 8 to be adjusted automatically, in particular considering measured ambient parameters.

In addition, the device 1 may have an anti-capsizing structure, not shown.

Furthermore, the device 1 has at least one anchoring structure, not shown, by means of which the device 1 can be anchored to a sea bottom.

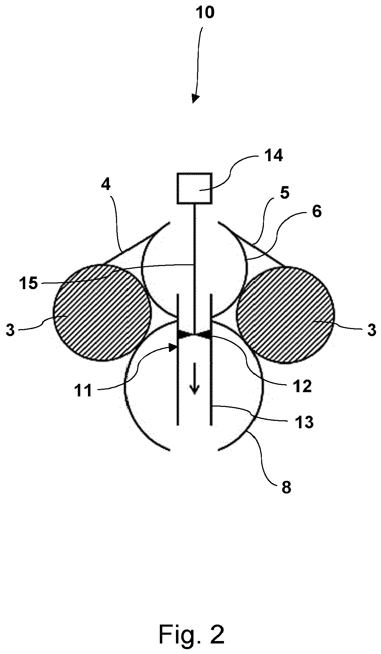

Fig. 2 shows a schematic representation of a further embodiment of a device 10 according to the invention for extracting energy from sea waves.

Device 10 differs from the embodiment shown in Fig. 1 in that an energy generation unit 11 is shown, which is drivable by seawater that has flown over the respective overflow section 4 or 5 and that is located in the water-receiving basin 6.

The energy generation unit 11 comprises a rotor 12, a discharge tube 13 penetrating the water-receiving basin 6 and the buoyancy chamber 8 for discharging water from the water-receiving basin 6 into the sea, an electric generator 14 including a gear box, not shown, and a shaft 14 connecting the rotor 12 to the electric generator 14 for driving the electric generator 14 with the rotor 12. The rotor 12 is drivable by seawater that has flown over the respective overflow section 4 or 5 and that is located in the water-receiving basin 6.

Furthermore, in order to avoid unnecessary repetition reference is made to the above description of Fig. 1.

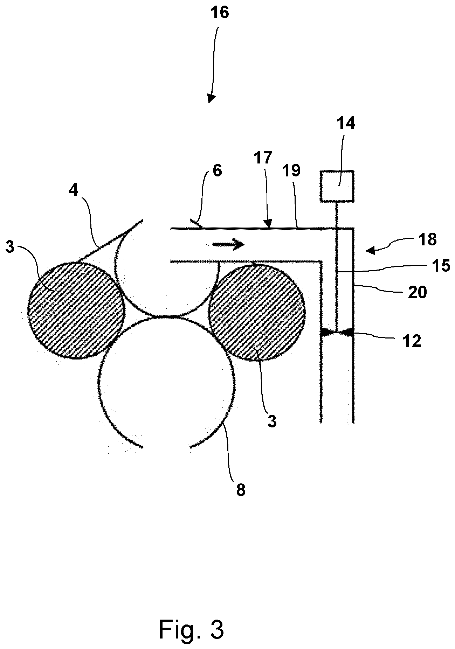

Fig. 3 shows a schematic representation of a further embodiment of a device 16 according to the invention for extracting energy from sea waves.

Device 16 differs from the embodiment shown in Fig. 2 in that the discharge tube 17 of the energy generation unit 18 does not penetrate the buoyancy chamber 8 but only laterally penetrates the water-receiving basin 6. Moreover, the discharge tube 17 is angled to have a horizontally extending tube section 19 laterally penetrating the water-receiving basin 6, and a vertically extending tube section 20 receiving the rotor 12 and a part of the shaft 15.

Furthermore, in order to avoid unnecessary repetition reference is made to the above description of Fig. 2.

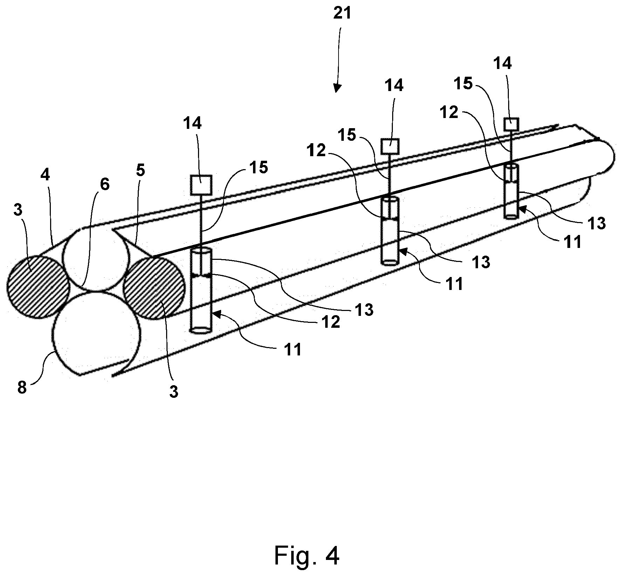

Fig. 4 shows a schematic and perspective representation of a further embodiment of a device 21 according to the invention for extracting energy from sea waves.

The device 21 differs from the embodiment shown in Fig. 2 in that three identical energy generation units 11 are arranged along the longitudinal extension of the device 21 at a distance from each other.

Furthermore, in order to avoid unnecessary repetition reference is made to the above description of Fig. 2.

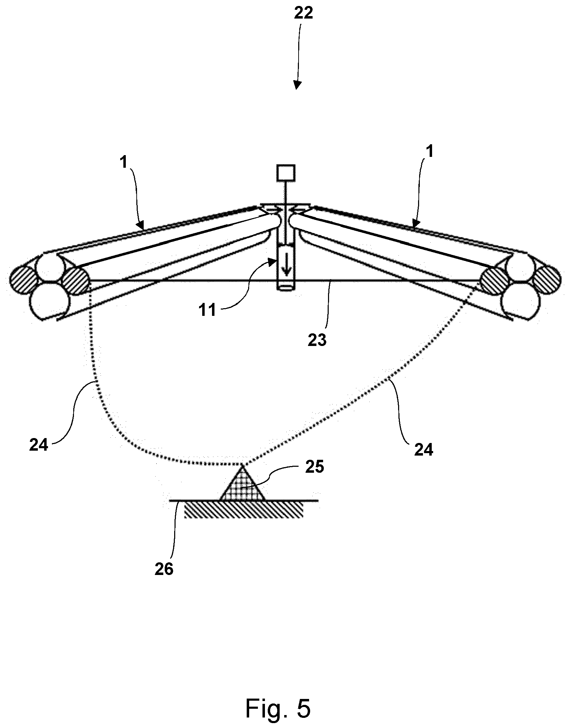

Fig. 5 shows a schematic and perspective representation of a further embodiment of a device 22 according to the invention for extracting energy from sea waves.

The device 22 comprises two devices 1 according to Fig. 1 arranged to form a V-shape. The devices 1 are connected to one another at their axial ends facing the viewer of Fig. 5 by a rigid connection element 23. The other axial ends of the devices 1 are connected with each other by an energy generation unit 11 according to Fig. 2, wherein both water-receiving basins 6 of the devices 1 are connected to the discharge tube 13 to discharge sea water from the respective water-receiving basin 6 into the sea.

Moreover, the device 22 comprises two slack mooring ropes 24 and an anchor 25 on the sea bottom 26, wherein the mooring ropes 24 connect the anchor 25 to the axial ends of the devices 1 facing the viewer of Fig. 5, i.e. the axial ends of the devices 1 opposing the axial ends of the devices 1 being connected to the energy generation unit 11. Through this, the device 22 self-orients to always face the variable direction of wave propagation, while the V-shape amplifies incoming waves and increases the efficiency of wave-energy conversion.

### Reference Signs

- 1: device
- 2: sea wave
- 3: floating body
- 4: overflow section
- 5: overflow section
- 6: water-receiving basin
- 7: sea water in 6
- 8: buoyancy chamber
- 9: water level in 8
- 10: device
- 11: energy generation unit
- 12: rotor
- 13: discharge tube
- 14: electric generator
- 15: shaft
- 16: device
- 17: discharge tube
- 18: energy generation unit
- 19: horizontal section of 17
- 20: vertical section of 17
- 21: device
- 22: device
- 23: connection element
- 24: mooring rope
- 25: anchor
- 26: sea bottom

## Claims

1. A floating body (3) for a device (1, 10, 16, 21, 22) for extracting energy from sea waves (2), **characterized in that** the floating body (3) is formed at least for the most part as an extruded floating body (3).

2. The floating body (3) according to claim 1, **characterized in that** the floating body (3) is formed at least for the most part from a thermoplastic polymer or a polymer foam.

3. The floating body (3) according to claim 1 or 2, **characterized in that** the floating body (3) is solid or a hollow body.

4. The floating body (3) according to one of claims 1 to 3, **characterized by** at least one ramp-shaped overflow section (4, 5).

5. The floating body (3) according to one of claims 1 to 4, **characterized in that** the floating body (3) is formed at least partially straight or curved.

6. A device (1, 10, 16, 21, 22) for extracting energy from sea waves (2), comprising at least one floating body (3) and at least one energy generation unit (11, 18) drivable by sea water (7) which has flown over at least one overflow portion (4, 5) of the device (1, 10, 16, 21, 22), **characterized in that** the floating body (3) is formed according to one of claims 1 to 5.

7. The device (1, 10, 16, 21, 22) according to claim 6, **characterized in that** the energy generation unit (11, 18) comprises at least one rotor (12) and at least one generator (14) drivable with the rotor (12), the rotor (12) being drivable by the seawater (7) that has flown over the overflow section (4, 5).

8. The device (1, 10, 16, 21, 22) according to claim 6 or 7, **characterized in that** the energy generation unit (11, 18) comprises at least one rotor (12) and at least one pump drivable with the rotor (12) for compressing a working medium, the rotor (12) being drivable by the seawater (7) which has flown over the overflow section (4, 5).

9. The device (1, 10, 16, 21, 22) according to claim 7 or 8, **characterized by** at least one water-receiving basin (6) arranged relative to the floating body (3) in such a way that the seawater that has flown over the overflow section (4, 5) enters the water-receiving basin (6) and passes from the water-receiving basin (6) to the rotor (12).

10. The device (1, 10, 16, 21, 22) according to claim 9, **characterized in that** the water-receiving basin (6) is formed at least for the most part as an extruded water-receiving basin (6).

11. The device (1, 10, 16, 21, 22) according to one of claims 6 to 10, **characterized by** at least one buoyancy chamber (8) being open to the sea bottom and means for varying a volume of air within the buoyancy chamber (8), said means being adapted to vary said volume of air within said buoyancy chamber (8) such that at least a maximum filling level within said water-receiving basin (6) is arranged geodetically higher than an equilibrium sea level.

12. The device (1, 10, 16, 21, 22) according to claim 11, **characterized in that** the buoyancy chamber (8) is formed at least for the most part as an extruded buoyancy chamber (8).

13. The device (1, 10, 16, 21, 22) according to one of claims 6 to 12, **characterized by** at least one anti-capsizing structure.

14. The device (1, 10, 16, 21, 22) according to one of claims 6 to 13, **characterized by** at least one anchor (25) and at least one slack mooring rope (24) connecting the anchor (25) at least indirectly to the floating body (3).

15. A method for manufacturing a floating body (3) for a device (1, 10, 16, 21, 22) for extracting energy from sea waves (2), **characterized in that** the floating body (3) is manufactured at least for the most part using an extrusion process.
